# EUROPÄISCHE PATENTSCHRIFT

(11) **EP 1 389 703 B1**
(45) Veröffentlichungstag und Bekanntmachung des Hinweises auf die Patenterteilung: **09.06.2010**
(21) Anmeldenummer: 03017826.3
(22) Anmeldetag: 05.08.2003
(51) Int. Cl.: F16K 27/02, F16K 27/06, B67D 3/04

(54) **Entnahmehahn aus Kunststoff für Transport- und Lagerbehälter für Flüssigkeiten**
Dispensing tap made of plastic for a transport and storage container for liquids
Robinet de distribution en matière plastique pour un récipient de transport et de stockage de liquides

(30) Priorität: 13.08.2002 DE 20212421 U
(43) Veröffentlichungstag der Anmeldung: 18.02.2004
(73) Patentinhaber: PROTECHNA S.A., 1701 Fribourg (CH)
(72) Erfinder: Schütz, Udo, 56242 Selters/Wasterwald (DE)
(74) Vertreter: advotec.

(56) Entgegenhaltungen:
- EP-A- 0 943 850
- EP-A- 1 106 565

## Beschreibung

Die Erfindung betrifft einen Entnahmehahn aus Kunststoff für Transport- und Lagerbehälter für Flüssigkeiten, der als Klappen- oder Kugelhahn ausgebildet ist und ein Hahngehäuse mit einem an den Auslaufstutzen des Flüssigkeitsbehälters anschließbaren Einlaufstutzen sowie mit einem Auslaufstutzen aufweist, der mit dem Vaterteil einer Hebelarmkupplung (vgl. DIN 2828) zum Anschluß eines Entnahmeschlauches verschweißt ist.

Als Klappenhähne ausgebildete Entnahmehähne der gattungsgemäßen Art werden z.B. bei aus der DE 195 11 723 C1 bekannten Flüssigkeitsbehältern verwendet, die mit einem palettenartigen Untergestell, einem austauschbaren Innenbehälter aus Kunststoff mit vier Seitenwänden, einem unteren und einem oberen Boden, einem Einfüllstutzen und einem Auslaufstutzen sowie mit einem den Innenbehälter umgebenden Außenmantel ausgestattet sind, der als Blechmantel oder Gittermantel aus senkrechten und waagrechten Gitterstäben aus Metall ausgebildet ist.

Bei dem in der DE 298 24 096 U1 beschriebenen Klappenhahn bestehen das Hahngehäuse und das mit dem Auslaufstutzen desselben verschweißte Vaterteil einer Hebelarmkupplung aus einem Polyethylen hoher Dichte (PE-HD). Dieser Kunststoff verleiht dem Hahngehäuse und dem Vaterteil der Hebelarmkupplung eine begrenzte Elastizität, die bei dem Hahngehäuse erwünscht ist, um eine dichte Schließstellung der Klappenscheibe zu erreichen, bei dem Vaterteil der Hebelarmkupplung jedoch den Nachteil hat, dass durch das Festspannen des Mutterteils der Hebelarmkupplung, das auf dem Anschlußende eines Entleerschlauches befestigt ist, auf dem sich geringfügig elastisch verformenden Vaterteil mittels der am Mutterteil angebrachten Spannhebel ein dichter Anschluß des Entleerschlauches nicht mit der gewünschten Sicherheit gewährleistet ist.

Der Erfindung liegt die Aufgabe zugrunde, die bei dem gattungsgemäßen Entnahmehahn für Flüssigkeitsbehälter verwendete Hebelarmkupplung zum Anschließen eines Entleerschlauches an das Hahngehäuse im Hinblick auf eine optimale Dichtheit weiterzuentwickeln.

Diese Aufgabe wird erfindungsgemäß gelöst durch einen Entnahmehahn mit den Merkmalen des Schutzanspruchs 1.

Der Unteranspruch beinhaltet eine vorteilhafte Weiterbildung des Entnahmehahns.

Der neue Entnahmehahn verkörpert eine einfache und zweckmäßige Lösung der der Erfindung zugrunde liegenden Aufgabenstellung.

Die Erfindung ist nachstehend anhand von Zeichnungsfiguren erläutert, die folgendes darstellen:

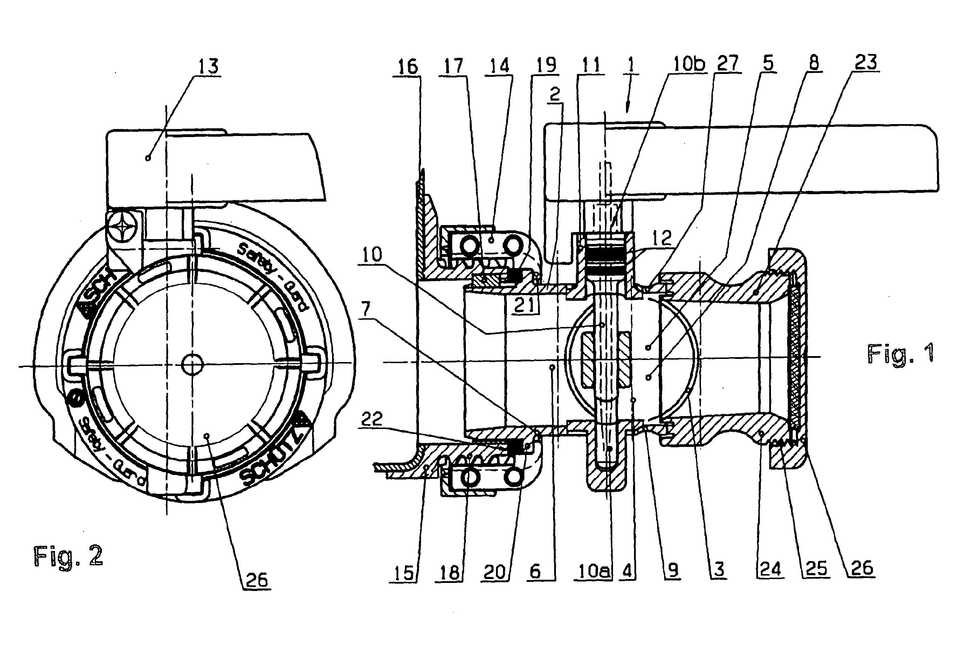

- Fig. 1: eine Längsschnittdarstellung eines Klappenhahns und
- Fig. 2: eine Stirnansicht des Klappenhahns.

Das aus einem Polyethylen hoher Dichte (PE-HD) hergestellte Hahngehäuse 2 des Klappenhahns 1 nimmt eine Klappenscheibe 3 zum Öffnen und Schließen der zentralen Durchflußöffnung 4 der Gehäusekammer 5 auf, die mit dem Einlaufkanal 6 des Einlaufstutzens 7 und dem Auslaufkanal 8 des Auslaufstutzens 9 des Hahngehäuses 2 in Verbindung steht. Die Klappenscheibe 3 ist exzentrisch an einer Drehwelle 10 befestigt, deren eines Ende 10a im Hahngehäuse 2 drehbar gelagert ist und deren anderes Ende 10b über einen Lagerstutzen 11 aus dem Hahngehäuse 2 nach außen vorsteht. Die Drehwelle 10 ist mittels Dichtringen 12 in dem Lagerstutzen 11 nach außen abgedichtet. Auf dem aus dem Hahngehäuse 2 herausragenden Ende 10b der Drehwelle 10 ist ein Handgriff 13 zum Öffnen und Schließen des Klappenhahns 1 angebracht.

Der Klappenhahn 1 ist mittels einer Überwurfmutter 14 an dem Auslaufstutzen 15 eines Flüssigkeitsbehälters 16, z.B. einem Kunststoff-Innenbehälter eines Palettenbehälters befestigt, wobei beim Blasformen des Flüssigkeitsbehälters 16 der als Kunststoff-Spritzgußteil vorgefertigte Auslaufstutzen 15 in die Blasform eingelegt und an den Flüssigkeitsbehälter 16 angeblasen wird.

Ein auf den Einlaufstutzen 7 des Hahngehäuses 2 aufgeschweißter oder aufgeklebter Adapterring 17 aus Kunststoff dient zum einen als Verdrehsicherung für das mit dem Einlaufstutzen 7 in den Auslaufstutzen 15 des Flüssigkeitsbehälters 16 eingesetzte Hahngehäuse 2 und zum anderen zum Positionieren des Hahngehäuses 2 beim Einschieben desselben mit dem Einlaufstutzen 7 in den Auslaufstutzen 15 des Flüssigkeitsbehälters 16.

Beim Aufschrauben der unverlierbar auf dem Einlaufstutzen 7 des Hahngehäuses 2 sitzenden Überwurfmutter 14 auf den mit einem entsprechenden Außengewinde 18 versehenen Auslaufstutzen 15 des Flüssigkeitsbehälters 16 wird ein auf dem Einlaufstutzen 7 des Hahngehäuses 2 angeordneter Dichtring 19 zwischen einem Bund 20 des Einlaufstutzens 7, an dem die Überwurfmutter 14 mit einem Ringansatz 21 angreift, und der Stirnfläche 22 des Auslaufstutzens 15 des Flüssigkeitsbehälters 16 eingespannt und damit eine flüssigkeitsdichte Verbindung zwischen dem Klappenhahn 1 und dem Flüssigkeitsbehälter 16 erreicht.

An den Auslaufstutzen 9 des Hahngehäuses 2 ist das Vaterteil 23 einer Hebelarmkupplung (vgl. DIN 2828) zum Anschließen eines mit dem entsprechenden Mutterteil versehenen Anschlußendes eines Entnahmeschlauchs angeschweißt. Das Vaterteil 23 ist als Spritzgießteil aus einem glasfaserverstärktem Polyethylen hoher Dichte (PE-HD) hergestellt. Das äußere Ende 24 des Vaterteils 23 weist ein Außengewinde 25 zum Aufschrauben einer Schutzkappe 26 beim Transport des Flüssigkeitsbehälters 16 auf.

Der Polyethylen-Kunststoff hoher Dichte verleiht dem Hahngehäuse 2 eine begrenzte Elastizität, die eine dichte Schließstellung der Klappenscheibe 3 des Klappenhahns 1 durch eine elastische Aufweitung des Hahnsitzes des Hahngehäuses 2 in der Schließstellung der Klappenscheibe 3 ermöglicht.

Die durch die Beimischung von Glasfasern bewirkte Härte des Polyethylenmaterials hoher Dichte des mit dem Auslaufstutzen 9 des Hahngehäuses 2 verschweißten Vaterteils 23 der Hebelarmkupplung ermöglicht eine dichte Verbindung des Klappenhahns 1 mit einen Entleerschlauch, an dessen Anschlußende das Mutterteil der Hebelarmkupplung befestigt ist, das mittels an diesem angelenkter Spannhebel auf dem Vaterteil festgespannt wird.

Eine Einschnürung 27 des Auslaufstutzens 9 des Hahngehäuses 2 bewirkt eine gegenseitige Entkopplung von begrenzt elastischem Hahngehäuse 2 und starrem Hebelarmkupplung-Vaterteil 23, so daß sich die gewünschten unterschiedlichen Werkstoffeigenschaften des Hahngehäuses 2 und des Hebelarmkupplung-Vaterteils 23 nicht ungünstig beeinflussen.

Das vorstehende für Klappenhähne beschriebene Konstruktionsprinzip kann auch bei Kugelhähnen angewendet werden.

## Patentansprüche

1. Entnahmehahn aus Kunststoff für Transport- und Lagerbehälter (16) für Flüssigkeiten, der als Klappen- oder Kugelhahn ausgebildet ist und ein Hahngehäuse (2) mit einem an den Auslaufstutzen (15) des Flüssigkeitsbehälters (16) anschließbaren Einlaufstutzen (7) sowie mit einem Auslaufstutzen (9) aufweist, der mit dem Vaterteil (23) einer Hebelarmkupplung zum Anschluß eines Entnahmeschlauchs verschweißt ist, **dadurch gekennzeichnet, dass** das Hahngehäuse (2) aus einem Polyethylen hoher Dichte (PE-HD) und das Vaterteil (23) der Hebelarmkupplung aus einem glasfaserverstärkten Polyethylen hoher Dichte (PE-HD) besteht.

2. Entnahmehahn nach Anspruch 1, **dadurch gekennzeichnet, dass** der Auslaufstutzen (9) des Hahngehäuses (2) eine Einschnürung (27) aufweist.

## Claims

1. Tapping valve of plastic for transport- and storage containers (16) for liquids, which is constructed as a flap valve or ball valve and has a valve housing (2) with an inlet connection (7) connectable to the outlet connection (15) of the liquid container (16) and with an outlet connection (9), which is welded to the male part (23) of a lever arm coupling for the connection of a removal tube, **characterized in that** the valve housing (2) consists of a high-density polyethylene (HDPE) and the male part (23) of the lever arm coupling consists of a high-density polyethylene (HDPE) reinforced with glass fibres.

2. Tapping valve according to Claim 1, **characterized in that** the outlet connection (9) of the valve housing (2) has a constriction (27).

## Revendications

1. Soupape de piquage en matière plastique pour des réservoirs de transport et de stockage (16) de liquides, qui est conçu sous la forme d'un robinet à clapet ou d'un robinet à boisseau sphérique et qui comporte un corps de robinet (2) avec une tubulure d'alimentation (7) susceptible de se raccorder sur la tubulure d'évacuation (15) du réservoir à liquide (16), ainsi qu'avec une tubulure d'évacuation (9), qui est soudée sur le raccord mâle (23) d'un accouplement à bras de levier pour le branchement d'un flexible de soutirage, **caractérisé en ce que** le corps de robinet (2) consiste dans un polyéthylène haute densité (PE-HD) et **en ce que** le raccord mâle (23) de l'accouplement à bras de levier consiste dans un polyéthylène haute densité (PE-HD) renforcé par fibres.

2. Soupape de piquage selon la revendication 1, **caractérisé en ce que** la tubulure d'évacuation (9) du corps de robinet (2) comporte un étranglement (27).
